# EUROPEAN PATENT SPECIFICATION

(11) **EP 2 937 598 B1**
(45) Date of publication and mention of the grant of the patent: **13.05.2020**
(21) Application number: 15164688.2
(22) Date of filing: 22.04.2015
(51) Int. Cl.: F16H 7/12, F16H 7/08

(54) **TENSIONER WITH INCREASED DAMPING**
SPANNVORRICHTUNG MIT ERHÖHTER DÄMPFUNG
TENDEUR À AMORTISSEMENT AUGMENTÉ

(30) Priority: 24.04.2014 US 201414260282
(43) Date of publication of application: 28.10.2015
(73) Proprietor: Litens Automotive Partnership, Woodbridge, ON L4L 5T9 (CA)
(72) Inventor: Frankowski, Marek, Innisfil, Ontario L9S 2E6 (CA); Farronato, Dino, Mississauga, Ontario L4T 2P8 (CA); Comsa, Rares I., Newmarket, Ontario L3X 1R7 (CA); Schimpl, Frank C., Toronto, Ontario M4G 2E8 (CA)
(74) Representative: Grünecker Patent- und Rechtsanwälte PartG mbB

(56) References cited:
- EP-A1- 0 450 620
- EP-A2- 2 239 483
- WO-A1-2008/068782
- WO-A1-2008/149389
- WO-A1-2013/059929
- WO-A1-2014/063228
- DE-C1- 3 716 571
- JP-A- 2011 202 778
- US-A- 1 667 117
- US-A- 2 002 081
- US-A- 2 051 488
- US-A1- 2008 058 143

## Description

### FIELD

This disclosure relates to tensioners and in particular tensioners that operate to tension synchronous endless drive members such as a timing belt on an engine.

### BACKGROUND

Tensioners are known devices for maintaining tension in belts (e.g. timing belts) or other endless drive members that are driven by an engine and that are used to drive certain components, such as camshafts. A tensioner typically includes a base that mounts to the engine, a tensioner arm that is pivotable with respect to the base about a pivot axis, a pulley that is mounted at a free end of the arm for engagement with the belt, and a spring that acts between the base and the arm to drive the arm into the belt. The direction into the belt (i.e. the direction in which the spring drives the arm) may be referred to as a direction towards a free arm position (i.e. towards a position that the tensioner arm would reach if no belt were present to stop it). This is a direction of lessening spring potential energy. The tensioner arm in general moves in this direction as the belt tension drops. The direction away from the belt (i.e. the direction against the biasing force of the spring) may be referred to as a direction towards a load stop position, and is a direction of increasing spring potential energy. The tensioner arm in general moves in this direction as the belt tension increases. It is known that it is desirable to provide damping on a tensioner in order to assist the tensioner arm in resisting being thrown off a belt during sudden increases in belt tension which can accelerate the tensioner arm suddenly towards the load stop position. In at least some demanding applications, however, the damping that is available from a typical prior art tensioner is not sufficient to satisfactorily inhibit such an event from happening. It would be desirable to provide a tensioner that has increased damping.

DE 37 16571 C1 discloses a belt tensioner having a ball-bearing which is operated in a dry environment. WO 2008/068782, which constitutes the closest prior art, discloses a tensioner having a journal bearing between a pulley and an eccentric disk. The gap between the pulley and the disc is supplied with oil via an oil feeding conduit provided in a pivot and further through a radial conduit in the eccentric disc to the gap between the pulley and disc. Further tensioners are disclosed in WO 2008/149389 A1, US 2008/058143 A1, WO 2013/059929 A1, JP 2011 202778 A, and US 2 002 081 A.

### SUMMARY

It is a provided a tensioner having the features defined in claim 1. Further preferred embodiments are defined in the dependent claims.

### BRIEF DESCRIPTION OF THE DRAWINGS

Figure 1 is a sectional side view of a prior art tensioner;
Figure 2A is a sectional side view of another prior art tensioner;
Figure 2B is a magnified sectional side view of a portion of the tensioner shown in Figure 2;
Figure 3 is a side view of an engine with a tensioner in accordance with an arrangement of the present disclosure;
Figure 4 is a sectional side view of the tensioner shown in Figure 3;
Figures 4A and 4B are exploded perspective views of a variant of the tensioner shown in Figure 4;
Figure 5 is a magnified sectional side view of a portion of the tensioner shown in Figure 4;
Figure 6 is a sectional view of a 'bottom' or 'proximal' portion of the tensioner shown in Figure 4, that contacts the engine;
Figure 7 is a sectional view of an 'upper' or 'distal' portion of the tensioner shown in Figure 4;
Figure 8 is a plan view of a spring and a damping element from the tensioner shown in Figure 4;
Figure 8A is a perspective view of the spring from the tensioner shown in Figure 4;
Figure 9 is a sectional side view of the spring and the damping element shown in Figure 8;
Figure 10 is a sectional side view of a tensioner with another arrangement in accordance the present disclosure;
Figure 11 is a magnified sectional side view of a portion of the tensioner shown in Figure 10;
Figure 12 is a graph illustrating the hub load on the pulley from the tensioners shown in Figure 1, Figure 2 and Figure 4;
Figures 13 and 14 are sectional side and plan views of another prior art tensioner;
Figure 15A-15G are graphs illustrating the belt tension in relation to the arm position of several different tensioner configurations;
Figure 16 is a diagram illustrating the setup for the tensioners tested from which the curves in Figures 15A-15G were generated;
Figures 17-19 are plan views of the spring and the damping element, with different relative angles between two ends of the spring;
Figure 20 is a diagram illustrating the vector sum of the forces acting on the ends of the spring in either of Figures 18 and 19;
Figure 21 is a top plan view of a tensioner with another arrangement in accordance with the present disclosure; the arrangement shown in Figure 21 is an embodiment of the present invention;
Figure 22 is a sectional view along section 22-22 in Figure 21;
Figure 23 is a top plan view of a tensioner with yet another arrangement of the present invention; the arrangement of Figure 23 is an embodiment of the present invention;
Figure 24 is a sectional view along section 24-24 in Figure 23;
Figure 25 is a top plan view of a tensioner in accordance with yet another arrangement of the present disclosure;
Figure 26 is a sectional view along section 26-26 in Figure 25;
Figure 27 is a top plan view of a tensioner in accordance with yet another arrangement of the present disclosure; and
Figure 28 is a sectional view along section 28-28 in Figure 27.
The arrangements shown in Figures 21, 22 and respectively 23, 24 are embodiments of the present invention while the arrangements shown in the further figures are only described as they are helpful for understanding the present invention.

### DETAILED DESCRIPTION OF EXAMPLE EMBODIMENTS

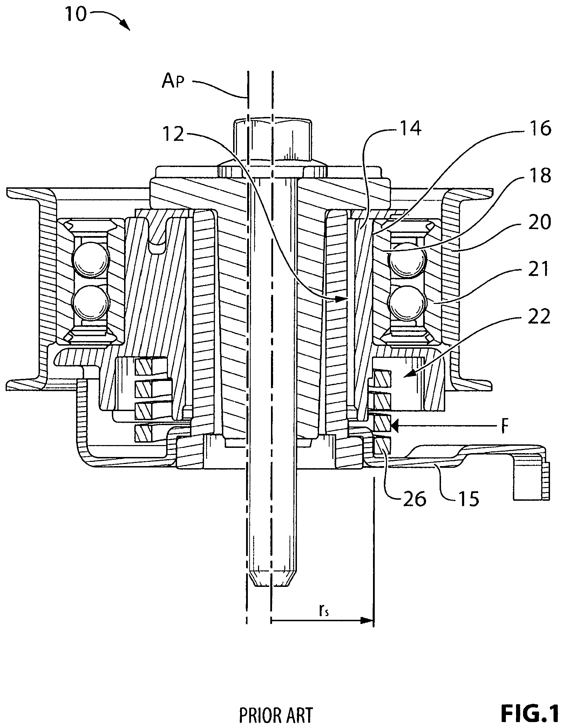

A prior art tensioner is shown at 10 in Figure 1, and includes a damping structure 12 that absorbs kinetic energy from a timing drive and converts the kinetic energy to heat through friction between components of the damping structure 12. The tensioner 10 includes a shaft 14, a base 15, a bushing 16, a tensioner arm 18, a pulley 20 that rotates on the arm 18 via a bearing 21 (e.g. a ball bearing) and a tensioner spring 22. The bushing 16 pivots with the tensioner arm about the shaft 14 during operation of the tensioner 10 in response to changes in tension of the endless drive member against which the pulley 20 is engaged. The endless drive member is not shown in Figure 1, but it will be understood that it may be a timing belt or the like.

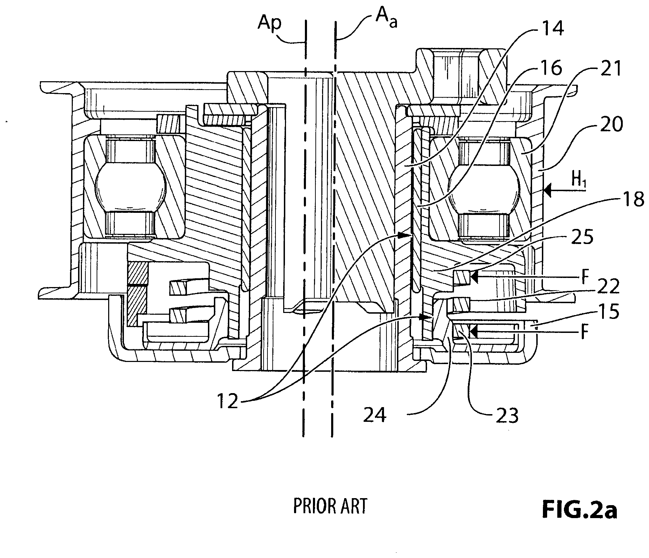

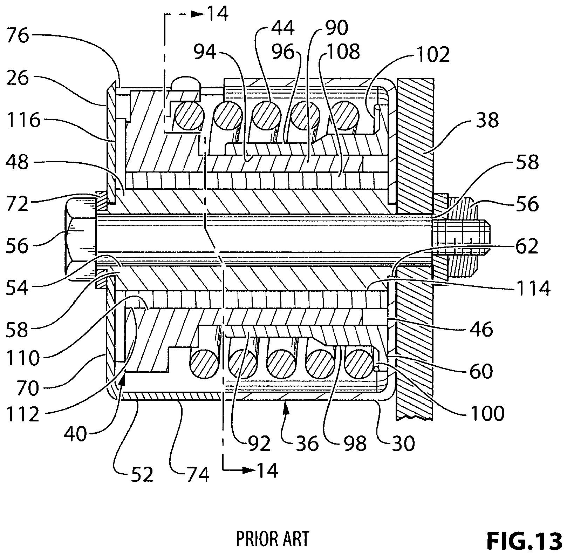

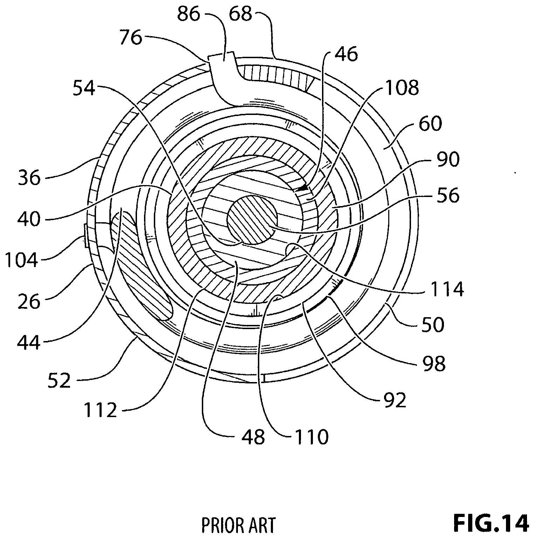

One source of friction is between the shaft 14 and the oscillating bushing 16 (which may be termed 'shaft-bushing friction'). In some applications the shaft-bushing friction is sufficient to control timing drive dynamics. However, sometimes more friction is required, as insufficient damping may lead to catastrophic failure of the belt and consequently catastrophic failure of the engine particularly in interference engine designs where the valves could collide with the pistons if the valve timing is incorrect. Referring to Figure 2A, a spring support 24 is provided. The spring support 24 may in some instances be rotationally locked to the base 15 by a locking feature. Also, the axial force of the spring 22 against the spring support 24 can at least somewhat prevent rotation of the spring support 24 relative to the base 15 (i.e. a high frictional torque may exist between the spring support 24 and the base 15 which means that the spring support 24 is not 'fixed' to the base 15 but would not be expected to rotate under most operating conditions. The first coil of the spring 22 engages the spring support 24 and applies a force F on it radially inwardly towards the tensioner arm pivot axis Aₐ. An example of the spring support is shown in Figures 13 and 14, which are figures from US Patent 4,473,362, the contents of which are hereby incorporated by reference. It will be noted that Figures 13 and 14 are reproductions of figures from the aforementioned US patent including reference numerals used in that patent. Accordingly, the reference numerals in those two figures do not relate to items in this description. For example, item 112 as used in this description is not related to reference numeral 112 as it appears in Figures 13 and 14.

The spring support 24 may be made of nylon or any other suitable material. The compressive force F of the spring 22 on the spring support 24 urges the spring support 24 against the tensioner arm 18, which generates friction as the tensioner arm 18 pivots and slides against the spring support 24 during operation of the tensioner 10.

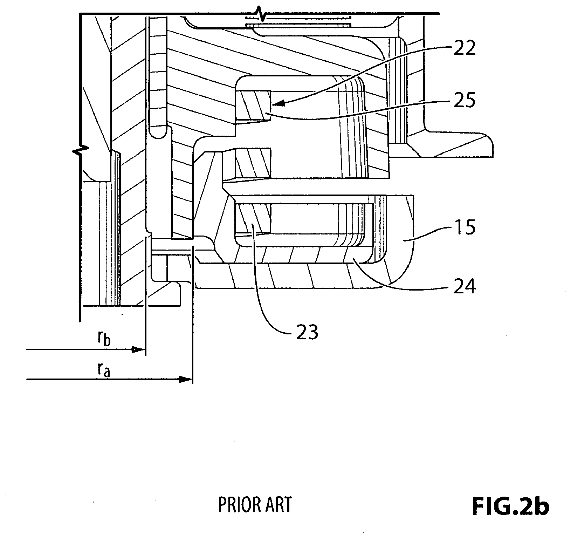

The spring 22 (which may be a torsion spring as shown) generates a torque T. The spring 22 has first and second ends 23 and 25 which end in tangs that are not shown in the sectional views in Figures 2A and 2B but which engage the base 15 and the arm 18 respectively. The first end 23 is hooked to the base 15 so as to be stationary relative to the engine, and is positioned at a distance r_{c} from the spring centre. The second end 25 moves with the tensioner arm 18. Thus along the helical length of the spring 22, there is progressively more and more rotational oscillation movement starting from the stationary first end 23 along the length of the spring 22 to the oscillating second end 25. A force F acts on the first end 23 of the spring 22. This force is transmitted to the spring support 24. The friction coefficient between the engaged surfaces of the arm 18 and the spring support 24 is represented by µₐ. The radius of the arm 18 at the region where the arm 18 contacts the spring support 24 is represented by rₐ as shown in Figure 2B. The frictional torque generated by the spring support 24 is: Mₐ= rₐ*µₐ*F. Additionally, the compression of the spring support 24 in turn compresses the arm 18 by some amount, which in turn causes additional shaft-bushing friction. This additional frictional torque will be ignored for the purposes of this description. The shaft-bushing frictional torque (ignoring compressive effects from the spring support 24) may be calculated as: M_{b} = r_{b}*µ_{b}*H₁, where r_{b} is the bushing radius, µ_{b} is the friction coefficient between the engaged surfaces of the bushing 16 and the shaft 14, and H₁ is the hub load vector. In an example, where the tensioner 10 has a 3mm arm (i.e. the offset between the pulley axis shown as Aₚ and the tensioner arm axis Aₐ is 3mm), and assuming an angle between the tensioner arm 18 and the hub load vector of 90°, the frictional torque generated by the spring support 24 is approximately 100%* Mₐ/M_{b} = 54% of the frictional torque generated by bushing (where rₐ = 12.5mm, R = 3mm, µₐ = 0.2, r_{c} = 20mm, r_{b} = 10mm, µ_{b} = 0.07). Thus the frictional torque provided by the spring support 24 may be substantial, compared to the frictional torque provided by the engagement between the shaft 14 and bushing 16.

It would be advantageous to provide other sources of friction, aside from those described above in at least some situations. For example, in belt-in-oil applications the friction generated between the shaft 14 and bushing 16 is reduced due to lubrication caused by the presence of the oil. Thus an additional source or alternative source of friction is desirable. Also, in many applications it would be advantageous to be able to use a relatively longer tensioner arm (i.e. where R>3mm). A longer tensioner arm may have better/larger take-up than a shorter arm, where 'take-up' is the amount of belt length the tensioner can compensate per one degree of rotation of the tensioner arm. Additionally, a longer arm permits more stable tension control. A longer arm may permit relatively easy pull-the-pin installation of the tensioner as compared to some tensioners which are complicated to install due to their use of an installation eccentric, which is an offset between the center of the shaft 14 and a pivot axis of the shaft 14 that is used to adjust the position of the shaft 14 during installation of the tensioner. Once the shaft 14 is correctly positioned, it is fixedly captured in its current position using a bolt or the like so that it does not pivot. Installation of such tensioners, however, can be complicated as noted above.

Long arm tensioners of the prior art, however, can sometimes generate too little frictional torque at the shaft-bushing interface precluding their use in some situations. In order to keep the bearings in the tensioner small (to keep costs down), an increase of the arm length can lead to a reduced shaft diameter, which in turn results in less frictional torque at the shaft-bushing interface. In an example, for a tensioner with a 30mm inner diameter ball bearing, the ratio of the frictional torque to produced torque may be determined as follows: A 3mm arm may be packaged with a 20mm diameter shaft. It may have a 15mm bearing radius - 3mm (arm eccentric) - 1 mm (aluminum arm wall) - 1 mm (bushing thickness) = 10mm (shaft radius). A 5mm arm may only be packaged in the same bearing with 16mm diameter shaft using a similar calculation as above. For a 3mm arm, the damping ratio would be 10mm (shaft radius) *0.1 (friction coefficient)*F (load)/3mm (arm eccentric) *F = 0.33. For a 5mm arm, the damping ratio would be 8*0.1/5 = 0.16. With such a low damping ratio, the tensioner with a 5mm arm would not be able to control timing drive dynamics in some cases. A damping ratio in the range of about 0.3 to about 0.4 may be suitable in some applications.

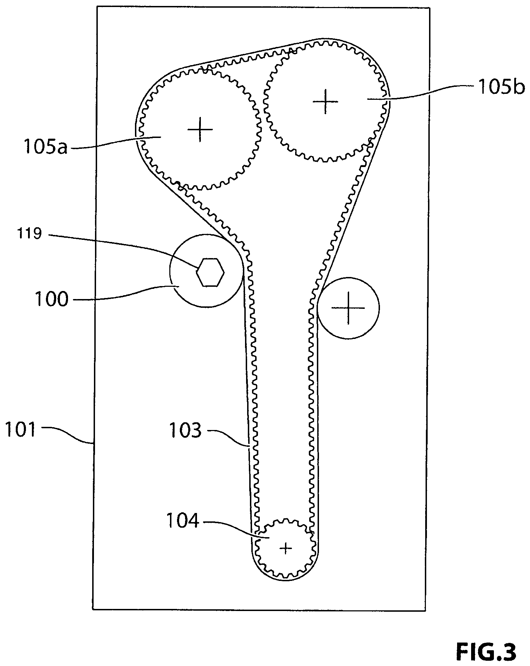

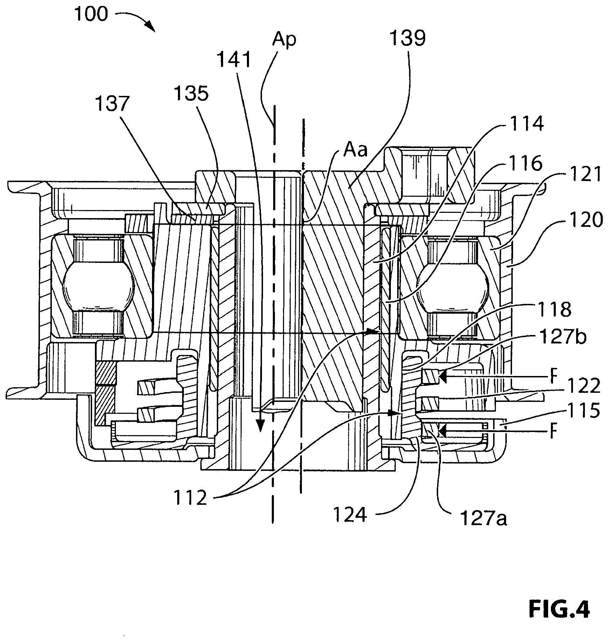

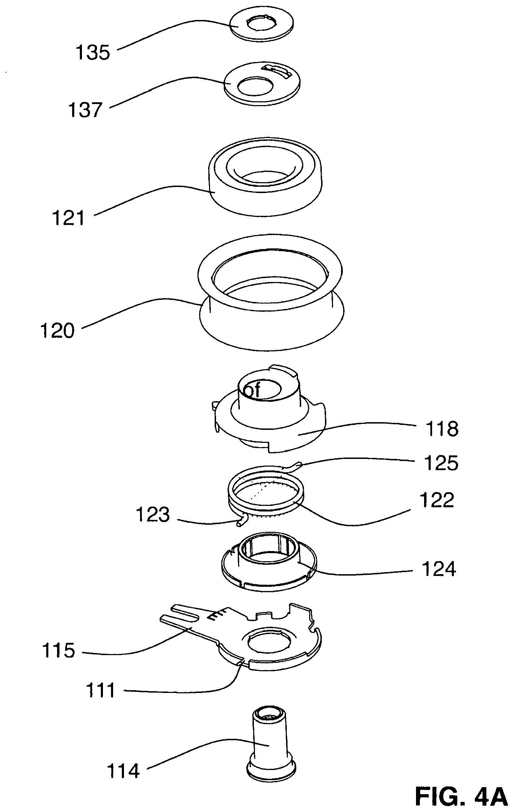

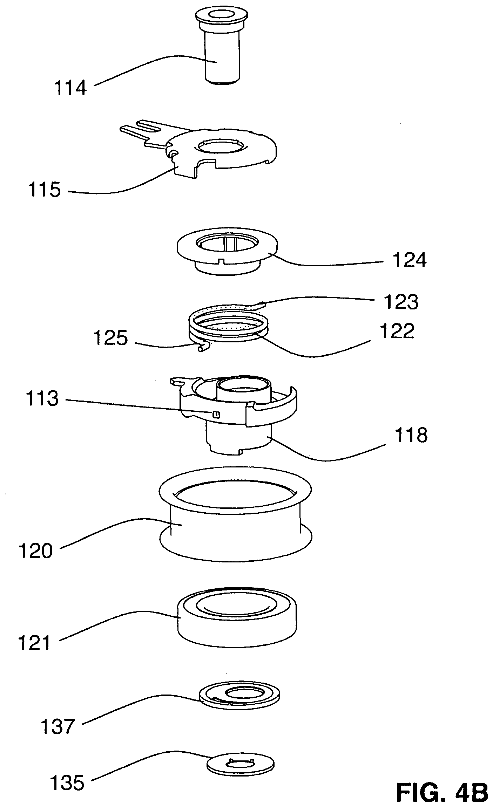

A tensioner 100 as shown mounted to an engine 101 in Figure 3, which provides additional damping as compared to the tensioner shown in Figures 2A and 2B. The tensioner 100 acts on a timing belt 103 that transfers rotational power from a crankshaft 104 to a pair of camshafts 105a and 105b. The additional damping provided by the tensioner 100 is provided via a spring support as shown at 124 in Figure 4. As a result, the tensioner 100 may have a tensioner arm length of more than 3mm (e.g. 5mm) in some instances. The tensioner 100 has a shaft 114 that may be similar to the shaft 14, a base 115 that is staked to one end of the shaft 114, a bushing 116 that may be similar to bushing 16, a tensioner arm 118 that may be similar to the tensioner arm 18, a pulley 120 that may be similar to the pulley 20, a bearing 121 that may be similar to the bearing 21, and a tensioner spring 122 that may be similar to the spring 22.

The tensioner arm 118 is pivotable about a tensioner arm pivot axis Aa shown in Figure 4. The pulley 120 is rotatable about a pulley axis Ap, which is offset from the tensioner arm pivot axis Aa, wherein the amount of offset is the length of the tensioner arm.

A retaining washer 135 is staked to the other end of the shaft 114 to hold selected components together. A polymeric bushing plate 137 is provided between the retaining washer 135 and the tensioner arm 118 to prevent metal-to-metal contact therebetween. The bushing 116 and the damping element 124 may together be generally referred to as a damping system 112.

In the arrangement shown in Figure 4 an installation eccentric 139 is provided in an aperture 141 in the shaft 114, which permits adjustment of position of the tensioner arm 118 during installation of the tensioner 100 on an engine. A fastener shown at 119 in Figure 3 passes through the aperture 141 (Figure 4) but is offset from the center of aperture 141 by the installation eccentric 139 to mount the tensioner 100 to the engine. However, in a preferred variant shown in Figures 4A and 4B, there is no installation eccentric, and a longer tensioner arm length 118 can be provided (e.g. 5mm as opposed to 3mm). In this variant, a fastener (not shown) passes through the aperture 141 (and is centered therein), to mount the tensioner 100 to the engine. The variant shown in Figures 4A and 4B may otherwise be similar to the arrangement shown in Figure 4.

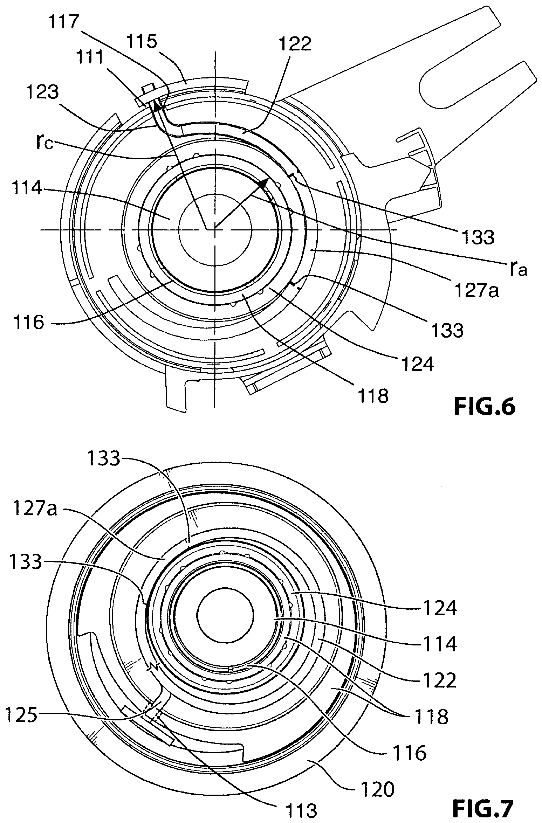

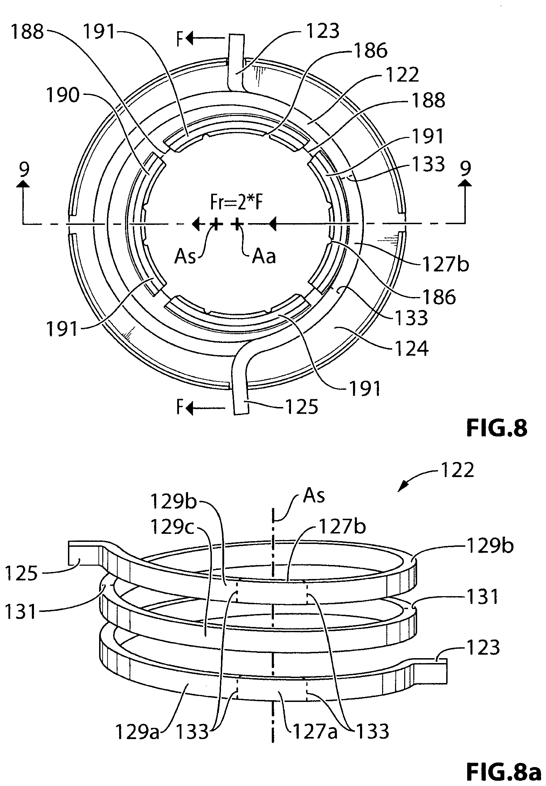

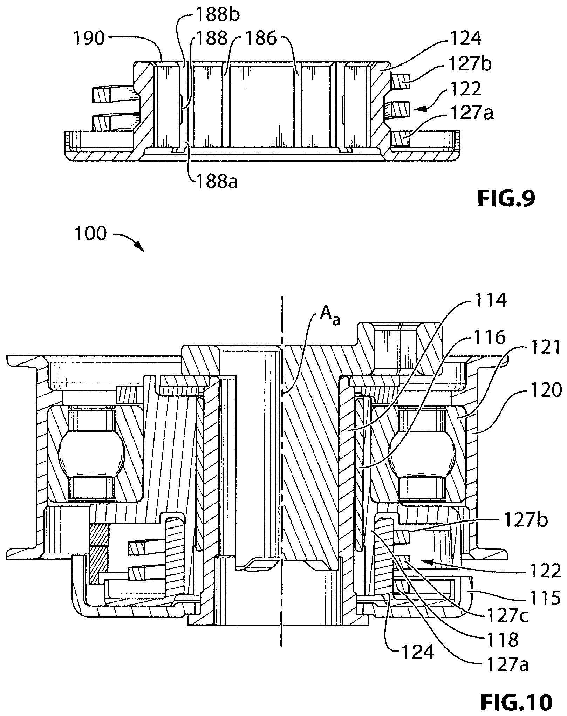

Figure 6 is a sectional view of a 'bottom' or 'proximal' portion of the tensioner 100 that contacts the engine. Figure 7 is a sectional view of an 'upper' or 'distal' portion of the tensioner 100. Figure 8 is a plan view of the spring 122 and the damping element 124. Figure 8A is a perspective view of the spring 122 alone. Figure 9 is a sectional side view of the spring 122 and the damping element 124.

As shown in Figures 8 and 8A, the tensioner spring 122 has a first end 123 and a second end 125, each of which ends in a tang. As shown in Figures 4A and 6, the tang at the first end 123 engages the base 115 (more particularly it engages a slot 111 in the base 115) so as to anchor the first end 123 of the spring 122. Additionally, as shown in Figure 7 the tang at the first end 123 passes through a slot 117 in the damping element 124, which rotationally fixes the damping element 124 to the base 115, while still permitting the damping element 124 to slide as needed to engage the tensioner arm 118. As shown in Figures 4B and 7 the tang at the second end 125 engages the tensioner arm 118 (more particularly it engages a slot 113 in the tensioner arm 118) so as to apply a biasing force urging the tensioner arm 118 into the belt 103. Referring to Figure 8A, the spring 122 may be a helical torsion spring that includes more than one coil wherein a coil is defined as a segment of the spring 122 that extends through 360 degrees. In this arrangement the spring 122 has 2.5 coils including a first end coil 129a, a second end coil 129b, and a 180 degree segment shown at 129c between the first and second end coils 129a and 129b. Delimiters between the coils 129a, 129b and the segment 129c are shown at 131.

Referring to Figures 8, 8A and 9, the spring support 124 may be similar to the spring support 24, however, in the tensioner 100, the spring support 124 is configured such that a first segment 127a in the first end coil 129a and a second segment 127b in the second end coil 129b both engage the spring support 124. The segments 127a and 127b are shown in a perspective view in Figure 8A. In Figure 6, only a portion of the spring 122 is shown so that the segment 127a is not obstructed. In Figure 7, a different portion of the spring 122 is shown so that the segment 127b can be seen unobstructed. As can be seen in Figures 6, 7 and 8A, delimiters shown at 133 show the extents of the segments 127a and 127b (i.e. they show the ends of the portions of the spring 122 that contact the spring support 124). As can be seen, the first segment 127a and the second segment 127b are axially offset or spaced from one another, and are in the first end coil 129a and second end 129b, respectively. Also, as can be seen in Figure 8A, the first and second segments 127a and 127b are generally aligned axially.

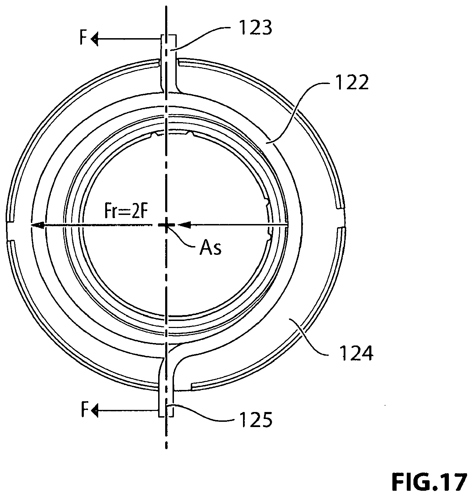

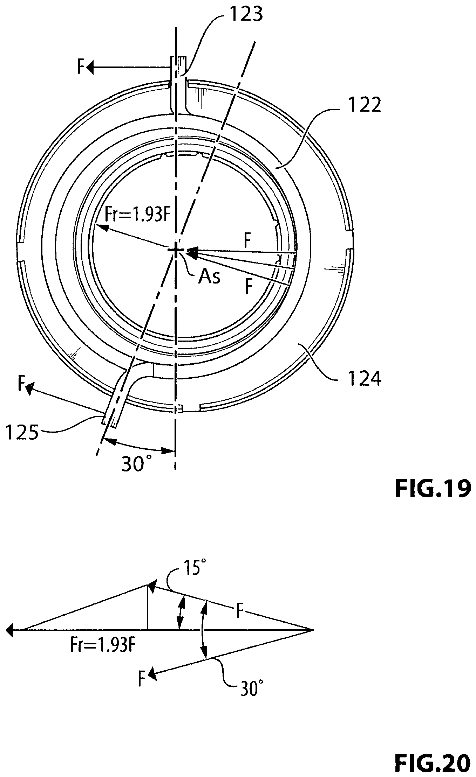

As shown in Figure 8, the overall force exerted on the spring support 124 by the spring 122 is F at the first end 123 and F at the second end 125. As a result, the overall frictional torque (and therefore damping) generated by the spring support 124 and the arm 118 is greater than (i.e. approximately double) that produced in the arrangement shown in Figures 2A and 2B (and the arrangement shown in Figure 1). This is based on the assumption that the force F that is exerted at the two ends 123 and 125 of the spring 122 are approximately in the same direction, which is true when the spring ends 123 and 125 are approximately 180 degrees apart angularly about the spring axis, shown at As (Figure 8). Their relative positions are shown in an example in Figure 8. Their ranges of relative positions during use over a range of belt tensions are shown in Figures 17-19. When they are 180 degrees apart, the forces are aligned and are purely additive. When they are at some other angle relative to each other, the forces are not purely additive and vector components of the forces must be considered to determine the overall force exerted on the spring support 124.

As noted above the second spring end 125 oscillates together with the tensioner arm 118. Thus, there is friction generated between the coil of the spring 122 adjacent to the second spring end 125 and the stationary spring support 124, and consequently there is the potential for wear on the spring support 124. In a belt-in-oil application this wear may be acceptable. In applications where the wire used for the spring 122 has a square cross-sectional shape, the pressure of the spring 122 on the spring support 124 is lower than the pressure exerted by a spring 122 round cross-section (since there is more contact area on the square cross-section spring). Thus in arrangements where a square (or rectangular) cross-section spring 122 is used, such as is shown in Figure 4, the wear may be acceptable. The wear may also be acceptable even in arrangements that include a round cross-section spring 122.

Based on the above, it can be seen that, as compared to the arrangement shown in Figures 2A and 2B, the frictional torque generated using the arrangement shown in Figure 4 is as follows: approximately twice the frictional torque generated by the spring support 24, a limitedly higher frictional torque that is generated between the shaft 14 and bushing 16, and additional friction generated between the second end 125 of the spring 122 and the spring support 124, which has no analogous arrangement in the arrangement in Figures 2A and 2B. The additional damping provided by the arrangement shown in Figure 4 may permit the use of a longer arm tensioner than is possible with the arrangement shown in Figures 2A and 2B. It may also permit the tensioner 100 to be used in a belt-in-oil application, in either a short-arm or long-arm configuration. The spring support 124 may be referred to as a damping element or a damper due to its increase role in the damping.

It will be noted that, while the spring 122 constricts during operation and applies a compressive force on the damping element 124 it may push oil away (in a helical direction - along the length of the spring coils) from the contact area between the spring 122 and the damping element 124. As a result, the presence of oil may not cause a large reduction in friction between the spring 122 and the damping element 124. It will also be noted that, while the spring 122 may be made from a spring wire having a square or rectangular cross-section, the wire may twist by some angle during operation and thus may engage the damping element at some points along a corner of the cross-sectional shape and not along a flat face of the cross-sectional shape. This will reduce by some amount lubricating effects of any oil that is present that would reduce the friction between the spring 122 and the damping element 124.

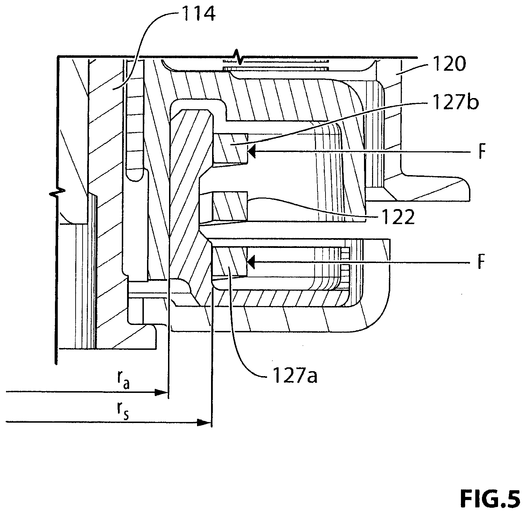

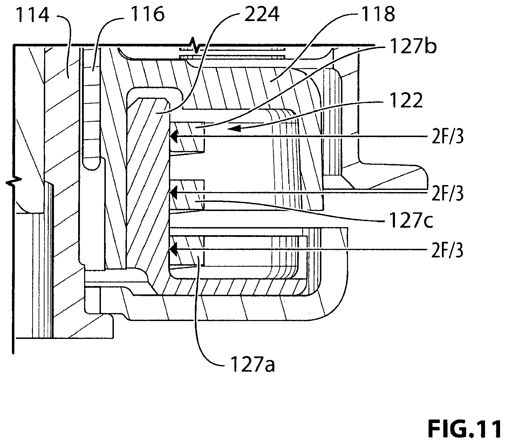

As shown in Figures 10 and 11, instead of only engaging the damping element 124 with segments 127a and 127b in the first and second end coils 129a and 129b of the spring 122 as shown in Figures 4 and 5, it is alternatively possible to provide an arrangement where at least one additional spring segment engages the damping element 124. For example, in the arrangement shown in Figures 10 and 11, the segment shown at 127c, which is positioned axially between the segments 127a and 127b, also engages the damping element 124. The overall force exerted by the spring 122 remains as being 2F, (based on the force F that is applied to the spring 122 at both ends 123 and 125 as shown in Figures 8 and 9), but because there are three spring segments that contact the damping element 124, the force exerted on the damping element 124 by each of the three spring segments 127a, 127b and 127c, is 2F/3, as shown in Figures 10 and 11. As a result, there is a reduced pressure applied by each coil on the damping element 124 as compared to the arrangement shown in Figures 4 and 5. Consequently there may be less wear on the damping element 124. If more than three axially spaced segments are in contact with the damping element 124, the force applied by each coil may be reduced further, thereby reducing the pressure on the damping element while maintaining the overall force (i.e. 2F).

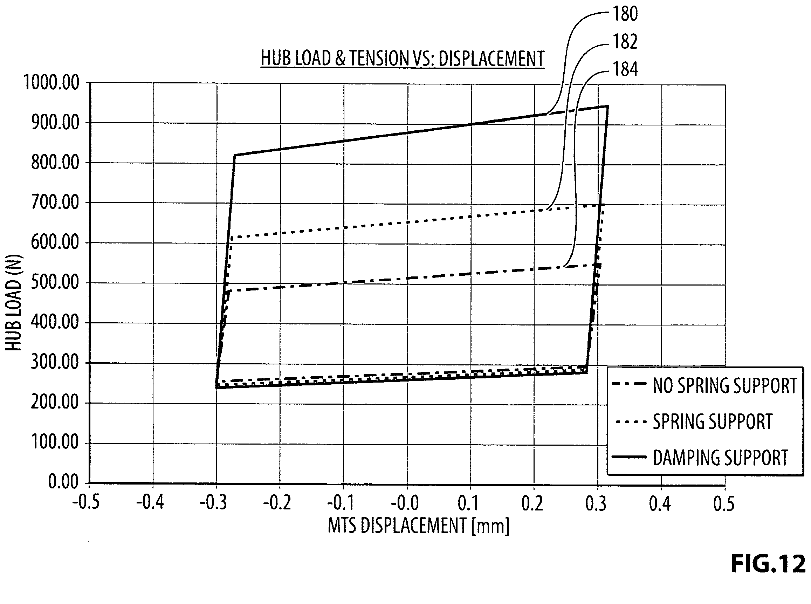

As noted above, all along the helical length of the spring 122, the magnitude of the oscillatory movement increases progressively along the helical length of the spring 122 from the stationary first end 123 to the second end 125 which oscillates with the arm 118. Thus each segment 127a, 127c, 127b has progressively more sliding movement with the damping element 124. While the first segment 127a has some non-zero amount of sliding movement with the damping element 124 it is relatively small and may be ignored for its impact on the overall damping provided by the tensioner 100. In an example if there are three segments 127a, 127b, and 127c and the tensioner arm 118 (and therefore the second end 125) oscillates with an amplitude of ±6 degrees, then the third segment 127c would oscillate with an amplitude of about ±3 degrees, and the first segment 127a would substantially not oscillate). In the arrangement shown in Figures 10 and 11, the frictional torque provided by the damping element 124 may be about 2.5 times the frictional torque provided by the spring support 24 of the tensioner 10 shown in Figures 2A and 2B. This increase in frictional torque (and therefore damping) is provided at essentially no added cost or complexity and without adding new components. The performance of the tensioner 100 relative to the tensioner 10 is shown in Figure 12, which shows hysteresis curves for the tensioner 100 at 180, the tensioner 10 with a spring support at 182 and the tensioner 10 with no damping element (as shown in Figure 1) at 184.

In applications where the friction surfaces will be exposed to oil, features may be provided to assist in removing oil from them so as to reduce the risk of sudden drops in friction and damping that can occur from the presence of oil. Slits (which may be referred to as channels or grooves) shown at 186 in Figure 9 in the damping element 124 are designed to provide oil reservoirs or transport channels to help to transfer oil out from contacting surfaces between the damping element 124 and the arm 118 (not shown in Figure 9). The channels 186 may be provided with sharp edges which can scrape oil from the surface of the arm 118 to reduce the risk of development of an oil film between the contacting surfaces of the damping element 124 and the arm 118. The presence of the channels 186 reduces the overall contact area between the damping element 124 and the arm 118, which increases the surface pressure between them. The size and/or number of the channels 186 can be selected to provide a selected surface pressure that may be high enough to squeeze oil out from between the contacting surfaces.

Another feature that may be provided on the damping element 124 may be reductions in wall thickness 188, which may be referred to as flex joints 188. The flex joints 188 increase the flexibility of the damping element wall (shown in Figure 9 at 190) which increases the contact area between the wall 190 and the tensioner arm 118 which in turn makes for less wear and more stable friction between them. These flex joints 188 can be provided any suitable way. For example, the flex joints 188 may extend axially along the axial length of the damping element wall 190. They may, in some arrangements, be provided on the face of the wall 190 that faces the arm 118. In the arrangement shown in Figures 8 and 9, it can be seen that the flex joints 188 are formed by slots that pass through the entirety of the wall thickness and which extend substantially along the entire axial length of the damping element 124 and which are closed at a first end 188a and open at a second end 188b. As can be seen in Figure 8 in particular, these slots separate a portion of the damping element 124 into segments shown at 191.

In other arrangements, the wall thickness at these flex joints 188 may be about half of the wall thickness elsewhere, or it may be a different non-zero fraction of the wall thickness away from the flex joints 188.

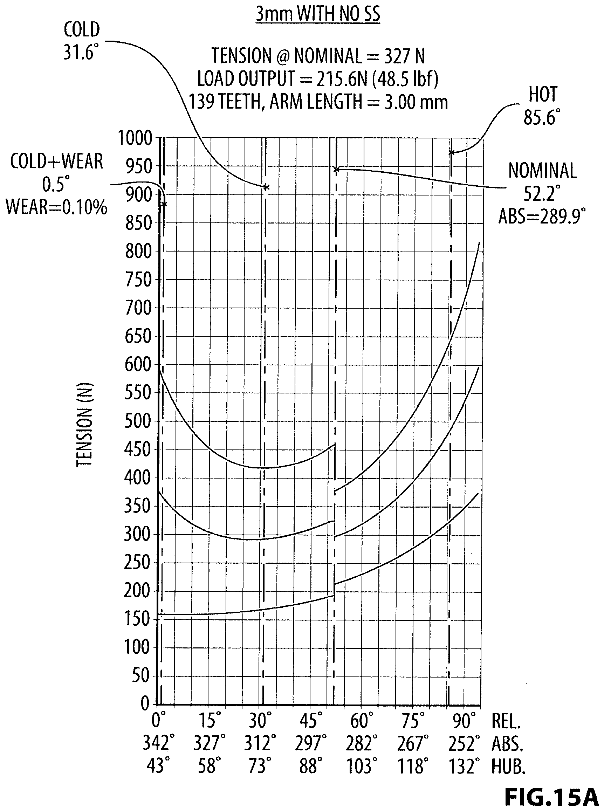

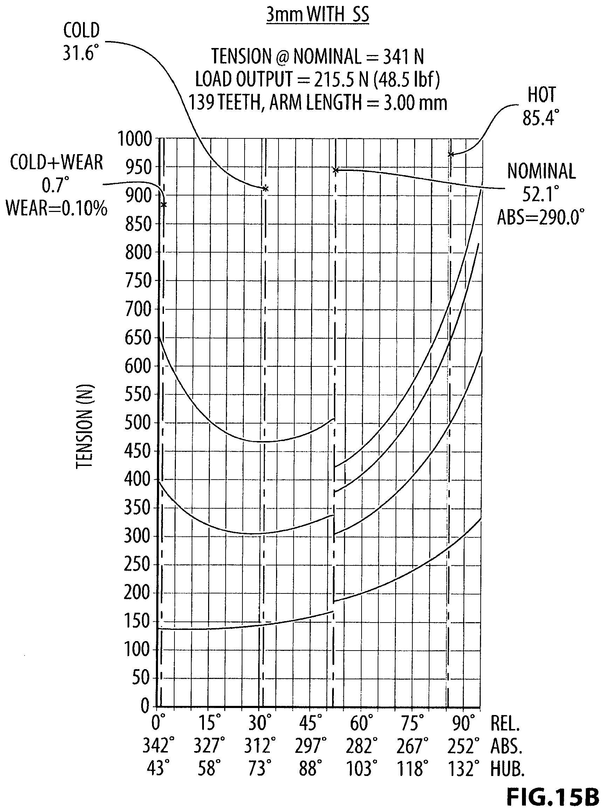

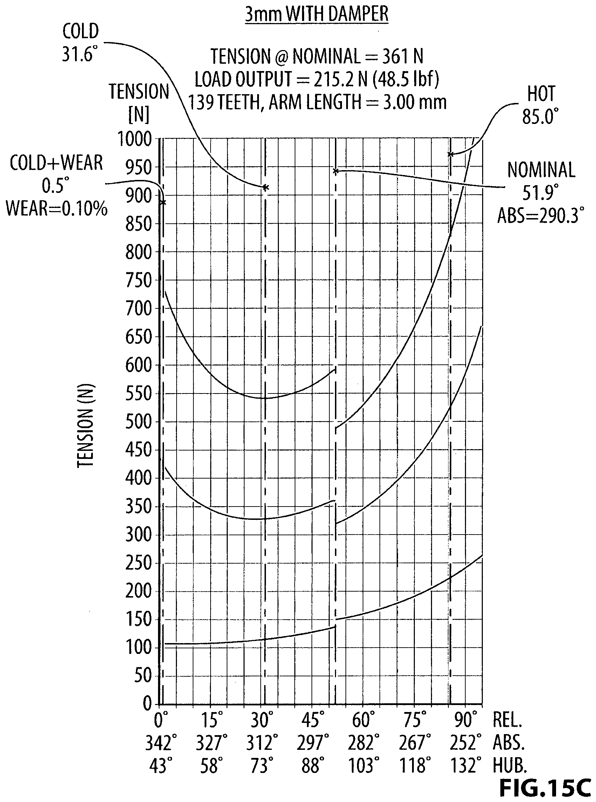

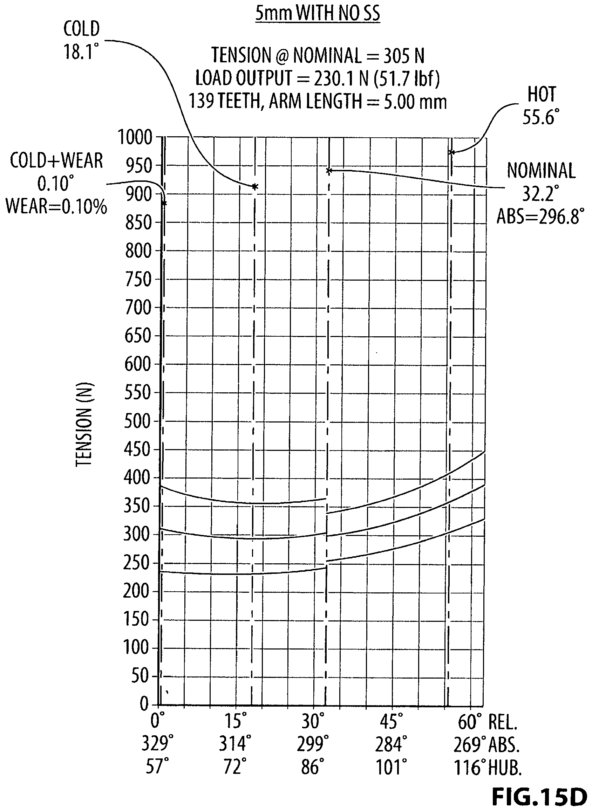

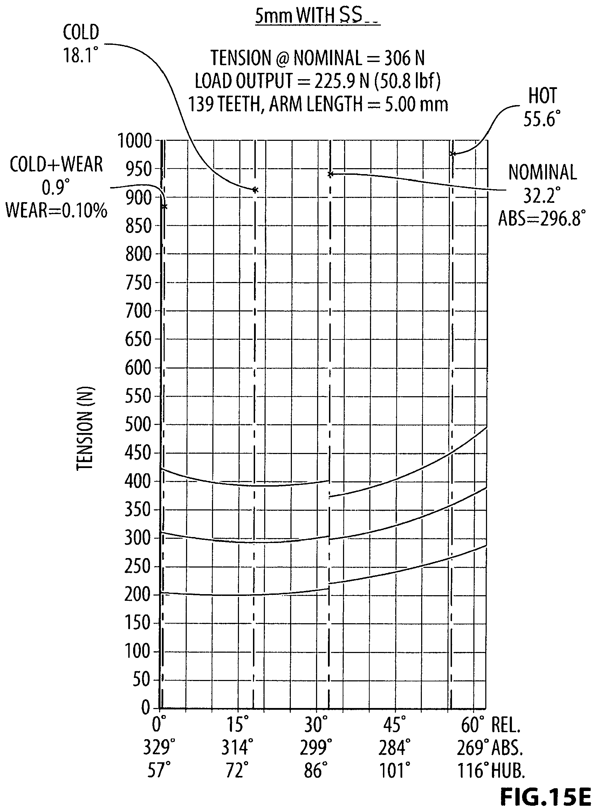

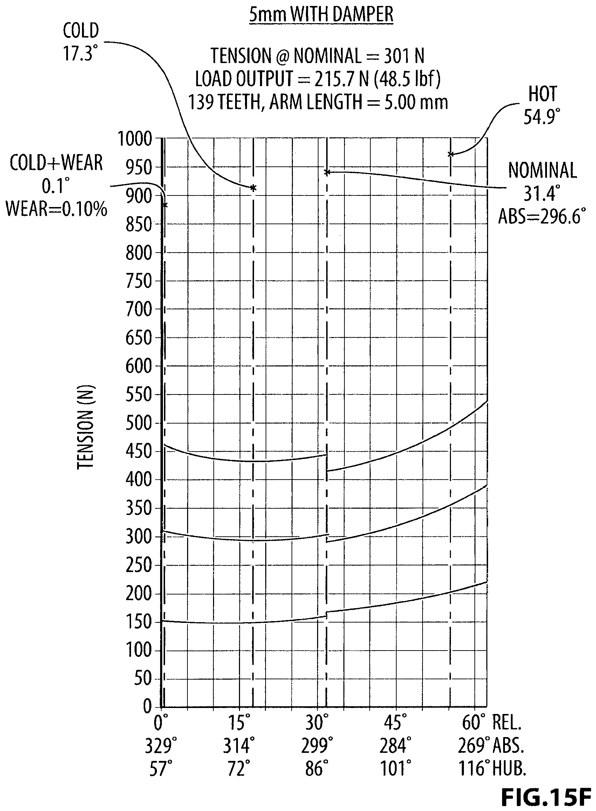

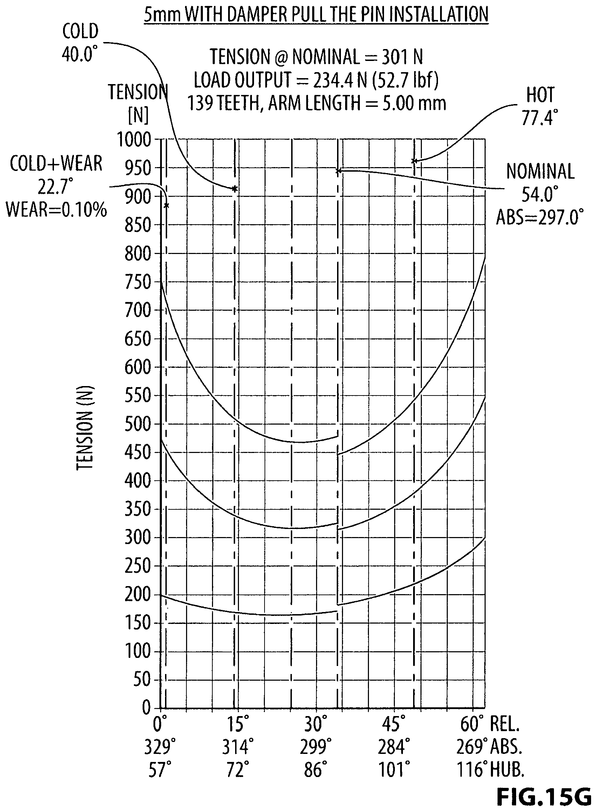

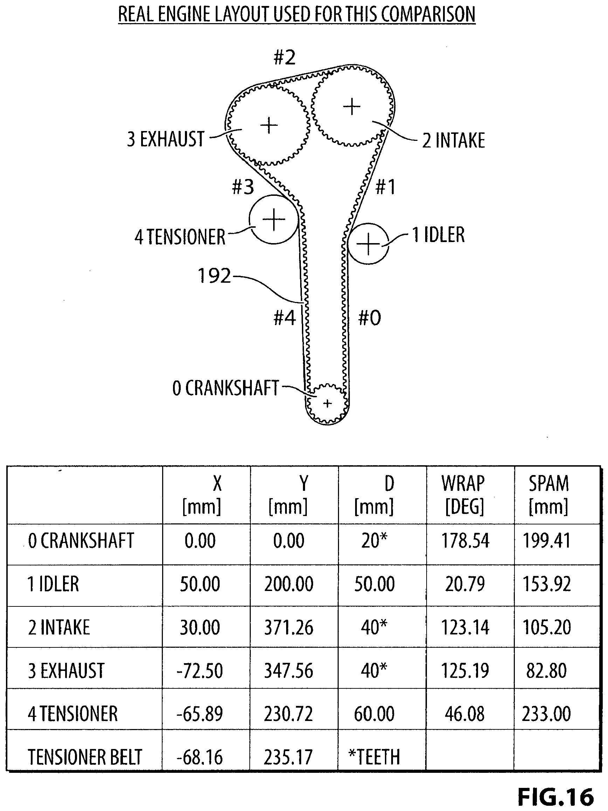

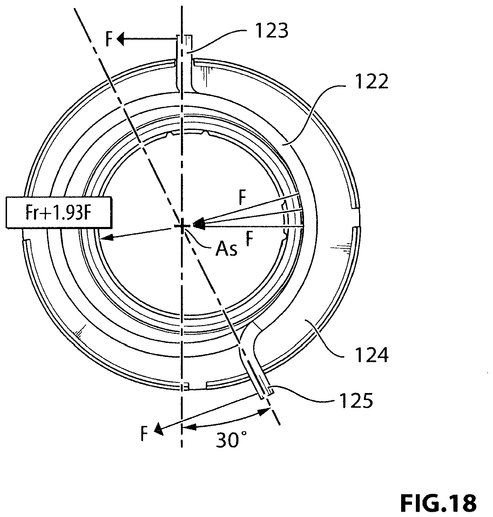

The graphs in Figures 15A-15G illustrate tension control provided by the tensioner 100. There are three curves shown in each graph. The top curve represents high tension (i.e. the tensioner 100 is pushed out by the belt shown at 192 in Figure 16); the bottom curve is low tension (i.e. the tensioner 100 follows a slack belt 192) and the center curve is the mathematical average of two extreme forces for each tensioner arm position. The graphs illustrate the performance of various tensioner configurations (e.g. different lengths of tensioner arm, use of spring support 24, use of damping element 124, no damping element). The graphs in Figures 15A-15C represent a tensioner with a 3mm arm length with no spring support, a tensioner with a 3mm arm length with a spring support similar to spring support 24, and a tensioner with a 3mm arm length with a damper similar to damper 124 respectively. The graphs shown in Figures 15D-15F represent a tensioner with a 5mm arm length with no spring support, a tensioner with a 5mm arm length with a spring support similar to spring support 24, and a tensioner with a 5mm arm length with a damper similar to damper 124 respectively. The graph in Figure 15G shows a 5mm arm tensioner with a damper similar to damper 124 and extra travel to allow for installation of a pull pin (100 degrees travel vs. 62 degrees travel for a standard installation method). The increased travel creates the challenge to control tension in a stable manner. Tension curves from the graphs in Figures 15A-15G are proportional to tensioner hysteresis curves at each angular position of the tensioner arm. The distance between the top and bottom curves on each graph is proportional to the tensioner damping, such that a wider distance means that more damping is provided. The graphs are prepared assuming that damper/spring contact points are always vertically aligned, for simplicity. The damping element 124 reduces its influence when forces are not aligned (illustrated in Figures 18-19) which helps to stabilize tension control at the extreme positions (i.e. at the ends of its range of travel). With reduced damping, the curve representing the maximum tension force is not as steep and the distance between the maximum and minimum tensions does not grow as much as is shown on the graphs close to the end of the tensioner travel. This reduction in the distance between the maximum and minimum tensions at the extremes of travel is advantageous for tensioners that have pull pins that are removed after installation, which require extra travel to compensate for engine and belt build tolerances. In some applications, the tensioner 100 may be configured to substantially align the damping element forces when the tensioner 100 is close to the center of its travel as shown in Figure 17. The alignment of the forces may be tailored to address a particular application requirement. For example, the tensioner 100 may be configured to have increased resistance as it approaches its load stop position so as to reduce the likelihood of actual contact with a limit surface on the tensioner that defines the load stop position.

The graphs in Figures 15A-15G have the same vertical scale so as to facilitate visually comparing the distance between the tension curves to draw conclusions as to which tensioner has more damping and will be more stable in use on an engine. It will be noted that:
►the 5mm arm tensioners have more stable tension control (i.e. the curves are relatively flat) but less damping (i.e. there is a smaller distance between max and min curves);
►the 5mm arm tensioner with the damper has more damping then the 3mm tensioner with no damper (and will therefore oscillate less on the engine); and
►the tension characteristics of the 5mm arm pull-the-pin installation tensioner are similar (i.e. similarly parabolic) to those of a 3mm arm tensioner that has an installation eccentric and its associated complicated installation procedure. Providing a pull-the-pin installation feature requires more arm travel to compensate for engine and belt dimensional tolerances. It can be difficult to design a pull-the-pin type tensioner with a 3mm arm length due to arm "over center" condition, whereby the tensioner arm locks up due to the geometry of the forces acting on it.

The tensioner 100 can provide good damping even in the presence of oil facilitates its use in a belt-in-oil arrangement, as a replacement for a timing chain design on an engine. For greater certainty however, it will be noted that the tensioner 100 may be advantageous in applications where no oil is present.

While the damping element 124 has been described as being made from nylon, other materials may be used, such as nylon with a Teflon™ coating on the inner surface (i.e. the surface that contacts the arm 118) or on the outer surface (i.e. the surface that contacts the spring 122) or on both the inner and outer surfaces. The spring 122 could be coated with a low friction material if desired so as to reduce wear that might occur on the damping element 124. Materials and coatings may be selected so that damping and wear characteristics may be as desired for a particular application.

Providing the tensioner 100 which has a plurality of axially spaced segments of the spring 122 in contact with the damping element 124 permits an improvement in damping which can facilitate the use of the tensioner 100 in a belt-in-oil application and/or the use of a longer arm tensioner than is possible using some damping structures of the prior art.

While a spring 122 having 2.5 coils in helical length is shown in the figures, it will be understood that the spring 122 could have fewer or more than 2.5 coils. For example, the spring 122 could have 1.5 coils and still have ends that are 180 degrees apart angularly, and would still have two segments that engage the damping element 124. In another example, the spring 122 could have 1.25 coils of helical length and would have ends that are 90 degrees apart angularly, while still having two segments that engage the damping element, although the forces applied at the spring ends would add in a vector sum of about 1.4F in such an instance. Other spring lengths are possible, such that three, four or any suitable number of segments of the spring 122 would engage a suitably lengthened version of the damping element 124.

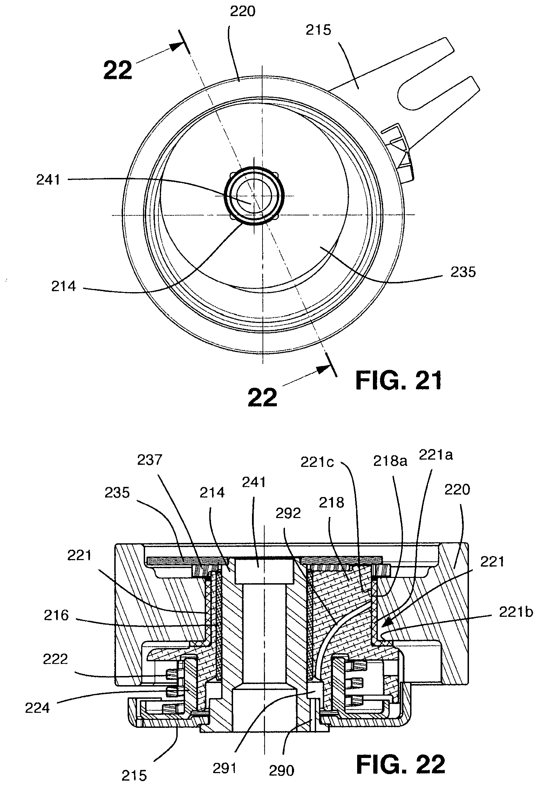

Reference is made to Figures 21 and 22, which show a tensioner 200 in accordance with another arrangement, which is an embodiment of the present invention. The tensioner 200 may be similar to the arrangement shown in Figures 10 and 11 but with the following differences. Instead of providing a bearing 121 between the pulley 120 and the tensioner arm 118, as shown in Figures 10 and 11, the tensioner 200 includes a pulley support bushing 221 that supports the pulley shown at 220 both axially and radially during relative rotation between the pulley 220 and the tensioner arm 218. To provide this support the bushing 221 includes an axial portion 221 a and a radial portion 221 b. The axial portion 221 a is generally cylindrical and is positioned between an inner bearing surface 220a on the pulley 220 and an outer bearing surface 218a on the tensioner arm shown at 218. The bushing 221 may be made from any suitable material such as a low friction material, such as a Teflon® coated nylon. The radial portion 221 b is generally annular and engages an axial support surface 220b on the pulley 220. The pulley 220 is thus captured axially between the radial portion 221 b of the bushing member 221 and the polymeric bushing member shown at 237.

The tensioner 200 includes a tensioner spring 222, a shaft 214, a base 215 staked to an end of the shaft 214, a friction bushing 216, and a damping element 224, all of which may be similar to the analogous elements from the tensioner 100 shown in Figures 10 and 11. It will be noted that the shaft 214 has a concentric aperture 241 for receiving a retaining fastener (not shown) for mounting the tensioner 200 to a stationary member such as the block of an engine. It is alternatively possible however for the shaft 214 to instead include an installation eccentric similar to the shaft 114. The damping element 224 may, as noted above be similar to the damping element 124 shown in Figures 10 and 11, or alternatively may be similar to the damping element 124 shown in Figure 9.

A retaining washer 235 is staked to the other end of the shaft 214 to hold selected components in place axially relative to one another, including the bushing member 237, the pulley 220, the pulley support bushing 221.

In some arrangements, to reduce the amount of friction present between the pulley support bushing 221 and the tensioner arm 218, a bushing lubrication oil transport structure may be provided to lubricate the mating surfaces shown at 221 c and 218a. The oil transport structure is configured to transport oil from outside of the tensioner 200 to the bushing 221 to facilitate rotation of the pulley 220 relative to the tensioner arm 218. The oil transport structure may be provided by a pass-through aperture 290 from outside of the tensioner through at least one of the shaft 214 and base 215, and an oil passage 292 through the arm 218 to the bushing 221, that is in fluid communication with the pass-through aperture 290. In the arrangement shown, a ring shaped oil chamber 291 (that is generally concentric with the pivot axis of the tensioner arm 218) is provided fluidically between the pass-through aperture 290 and the oil passage 292 through the tensioner arm. The ring-shaped oil chamber 291 permits fluid communication between the pass-through aperture 290 and the oil passage 292 regardless of the relative angular position between the pass-through aperture 290 and the oil passage 292. This permits the tensioner arm 218 to move as needed (based on spring force from the spring 222 and the tension in the belt) during operation of the tensioner 200 while still maintaining fluid communication between the oil passage 292 and the pass-through aperture 290.

The oil transport structure is shown to end at the interface between the bushing 221 and the tensioner arm 218. It may alternatively pass through the bushing 221 and end at the interface between the bushing 221 and the pulley 220. In either case, the oil transport system (and more particularly, the oil passage 292) may be said to transport oil to the bushing 221, so as to lubricate the interface between the bushing 221 and the element immediately adjacent the bushing 221 (i.e. either the pulley 220 or the tensioner arm 218).

An oil feed conduit (not shown) can be connected to the pass-through aperture 290 to introduce oil from an oil source to the oil transport structure in the tensioner 200. The pressure of the oil needs to be sufficiently high to ensure that it enters between the mating surfaces 221 c and 218a.

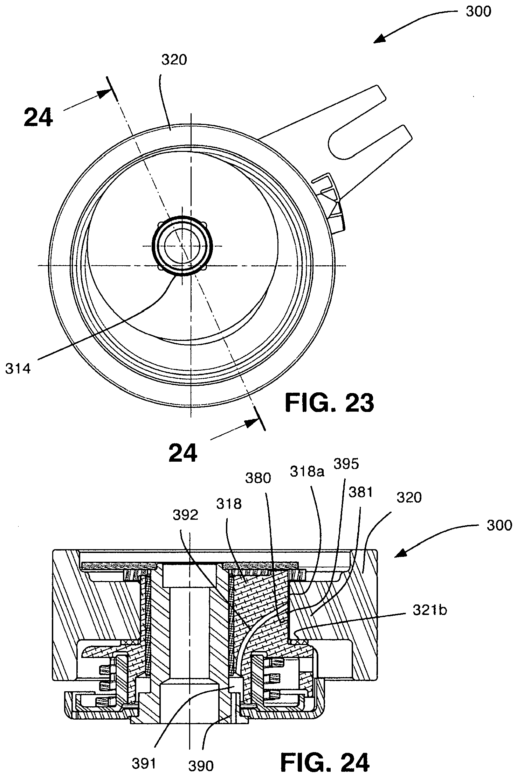

Reference is made to Figures 23 and 24 which show a tensioner 300 which may be similar to the tensioner 200 and includes an annular support bushing 321 b that is similar to the annular portion 221 b of the support bushing 221 in Figure 22. However the tensioner 300 lacks the axial portion of the pulley support bushing 221 and instead includes a journal bearing provided by the engagement between a radially inner surface 380 on a radially inward projection 381 on the pulley shown at 320, and a radially outer surface 318a on the tensioner arm shown at 318. An oil transport structure is provided for supplying oil to the engaged surfaces 318a and 380 and is similar to the oil transport structure shown in Figure 22, and therefore may include a pass-through aperture 390 that passes through at least one of the shaft 314 and the base 315, a ring-shaped oil chamber 391 and an oil passage 392 that passes through the tensioner arm 318 to the surfaces 318a and 380. A small space may be provided at 395 between the surfaces 318a and 380 to facilitate entry of oil therebetween.

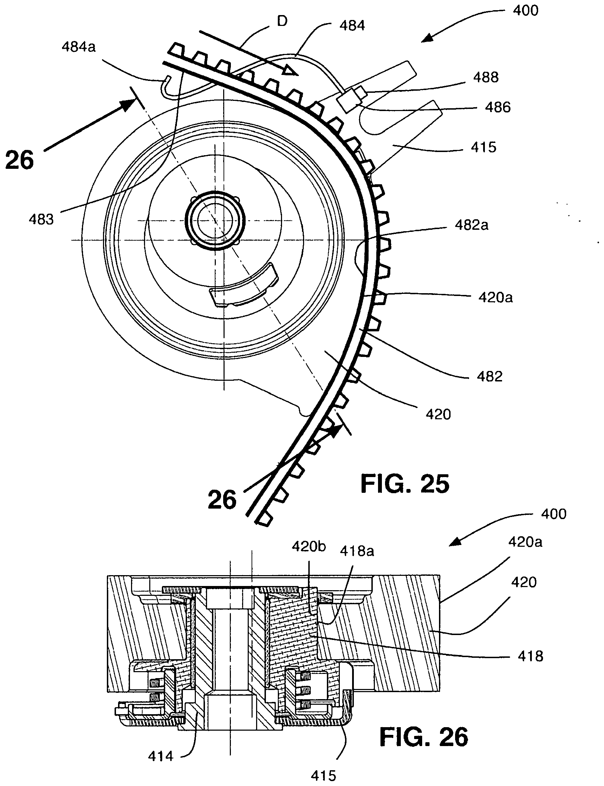

Reference is made to Figures 25 and 26, which show a tensioner 400 which may be similar to the tensioner 300, except that the tensioner 400 includes a belt-engagement shoe 420 instead of a pulley. The belt shown at 482 has a shoe engagement surface 482a (i.e. the backside of the belt 482) that slidingly engages an outer surface 420a of the shoe 420, which does not rotate about the outer surface (shown at 418a) of the tensioner arm shown at 418. In some arrangements, the shoe 420 and the tensioner arm 418 may be formed together from a single blank piece of material. This is distinct from the arrangements shown in the other figures in which a pulley is frictionally engaged by a belt and is caused to rotate on the tensioner arm. As shown in Figures 25 and 26, the outer surface 420a of the shoe 420 may have a curvature selected to avoid inordinate dynamic bending stresses on the belt 482. The outer surface 420a may also have a coating (e.g. Teflon®) thereon to maintain low friction with the belt 482. Optionally, to assist with providing low friction with the belt 482 a belt lubrication oil transport structure may be provide, that is configured to transport oil from outside of the tensioner 400 and to direct the oil to a portion 483 of the engagement surface 482a of the belt 482 prior to (i.e. upstream from) engagement of the portion 483 of the engagement surface 482a of the belt 482 with the shoe 420, to facilitate sliding engagement between the belt 482 and the shoe 420. (The direction of travel of the belt 482 is shown by arrow D.) The oil transport system may include for example, a semi-rigid oil flow conduit 484 that has an outlet end 484a that is directed towards the shoe engagement face 482a of the belt 482. At the inlet end of the conduit 484 is a mounting element 486 for connecting the conduit 484 to the base shown at 415 of the tensioner 400. The mounting element 486 has an inlet port 488 for connection to an oil feed conduit (not shown) to introduce oil from an oil source to the oil transport structure in the tensioner 400. The outlet end 484a of the conduit 484 may be oriented to direct oil on the engagement face 482a of the belt 482 in a suitable amount to provide a layer of oil between the engagement face 482a and the outer surface 420a of the shoe 420, thereby providing a hydrodynamic layer of lubrication between the belt 482 and the shoe 420.

In some arrangements however, the belt 482 may be suitable lubricated from the environment inside a belt-in-oil timing belt system such that the belt lubrication oil transport structure is not needed.

As mentioned above, in the tensioner 400 there need not be relative movement between the shoe 420 and the tensioner arm 418. In some arrangements, however, there may be some relative movement between the shoe 420 and the arm 418 (e.g. to permit the shoe to self adjust to the belt 482).

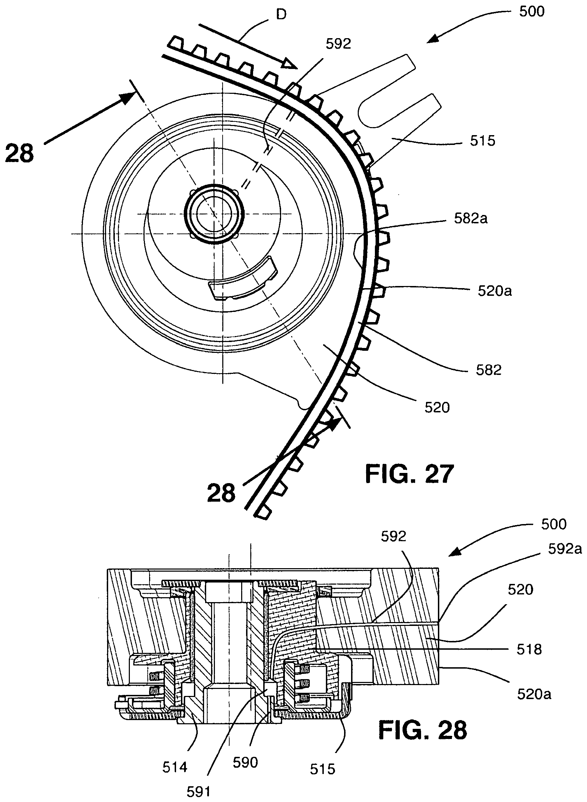

Reference is made to Figures 27 and 28, which show a tensioner 500, which may be similar to the tensioner 400, except that the oil transport structure for the tensioner 500 passes through the shoe shown at 520 itself and has an outlet at the belt engagement surface shown at 520a of the shoe 520. In the arrangement shown, the oil transport structure includes a pass-through aperture 590 that passes from outside the tensioner 500 through at least one of the shaft 514 and the base 515, and an oil passage 592 in fluid communication with the pass-through aperture 590, that passes through the tensioner arm shown at 518 and the shoe 520, and having an outlet 592a at the belt-engagement surface 520a of the shoe 520, so as to provide a layer (e.g. a hydrodynamic layer) of oil between the engagement surface 582a of the belt 582 and the belt engagement surface 520a of the shoe 520. In the arrangement shown, a ring-shaped oil chamber 591 (that is generally concentric with the pivot axis of the tensioner arm 518) is provided fluidically between the pass-through aperture 590 and the oil passage 592 through the tensioner arm 518 and shoe 520.

The position of the outlet 592a of the oil passage 592 may be at any suitable position to provide lubrication to the entirety of the portion of the belt 582 that is engaged with the shoe 520. In an arrangement, (as shown in Figure 27) the outlet 592a can be positioned proximate the upstream end of where the belt 582 engages the shoe 520. In an arrangement, using a computational flow dynamics analysis one can determine a position at which the highest bearing load exists between the belt 582 and the shoe 520, and the outlet 592 can be positioned there. One can then determine can then determine a suitable dispersion mechanism for the oil such as (e.g. one or more slots, grooves, having a herringbone pattern or any other suitable pattern), in order to modify pressure distribution and hydrodynamic flow between the moving belt 582 and the stationary surface 520a of the shoe 520. In some arrangements, the surface 520a may be ungrooved if it is determined to be advantageous for the purpose of reducing the friction between the belt 582 and the shoe 520. In some arrangements, a plurality of outlets 592a may be provided at different places on the surface 520a

For greater certainty, in the arrangements shown in Figures 21-28, the tensioner spring and the damping member that is engaged by the tensioner spring may have either of the configurations shown in Figure 9 or in Figures 10 and 11 or any other suitable configuration.

While the term 'oil' has been used in association with the oil transport structure in the arrangements shown in Figures 21-26, other suitable lubricants could alternatively be used.

In general, in the arrangements shown herein particular in Figures 21-28, leakage of oil from the tensioner is not an issue as the tensioner is in a belt-in-oil environment. Thus no seals are necessary to seal oil within the tensioner in at least some instances.

The above-described arrangements are intended to be examples only, and alterations and modifications may be carried out to those arrangements by those of skill in the art.

## Claims

1. A tensioner (200, 300) for an endless drive member (103), comprising:
a shaft (214) and base (215) that are mountable to be stationary relative to an engine;
a tensioner arm (218) that is pivotable relative to the shaft (214) about a tensioner arm axis (241);
a pulley (220, 320) on the tensioner arm (218) rotatable about a pulley axis that is offset from the tensioner arm axis (241), wherein the pulley (220, 320) is engageable with an endless drive member (103);
a tensioner spring (222) that is positioned to urge the tensioner arm (218) towards a free arm position; and
**characterized in that** the tensioner further comprises a damping element (224) that engages the tensioner arm (218) and that is engaged by a plurality of axially spaced segments of the tensioner spring (222), and a bushing (221, 321b) that is positioned radially and/or axially between the pulley (220, 320) and the tensioner arm (218) to support the pulley (220) radially during relative rotation between the pulley and the tensioner arm (218), and an oil transport structure (290, 292; 390, 391) configured to transport oil from outside of the tensioner (200, 300) to the bushing (221, 321b) to facilitate rotation of the pulley (220) relative to the tensioner arm (218).

2. A tensioner as claimed in claim 1, wherein the oil transport structure includes a pass-through aperture (290) from outside of the tensioner through the base (215), and an oil passage (292) through the tensioner arm (218) that is in fluid communication with the pass-through aperture (290).

3. A tensioner claimed in claim 2, wherein the oil transport structure further includes a ring shaped oil chamber (291) fluidically between the pass-through aperture (290) and the oil passage (292) through the tensioner arm (218), wherein the ring-shaped oil chamber (291) permits fluid communication between the pass-through aperture (290) and the oil passage (292) regardless of a relative angular position between the pass-through aperture and the oil passage.

4. A tensioner as claimed in one of the preceding claims, wherein the bushing (221) includes an annular portion (221a) that is positioned axially between the pulley (220) and the tensioner arm (218) to support the pulley axially during relative rotation between the pulley and the tensioner arm.

5. A tensioner as claimed in one of the preceding claims, wherein a radially inner surface of the pulley is engaged with a radially outer surface of the tensioner arm.

6. A tensioner as claimed in one of the preceding claims, wherein the oil transport structure is configured to transport oil from outside of the tensioner (200) to the radially inner surface of the pulley and radially outer surface of the tensioner arm to facilitate rotation of the pulley (220) relative to the tensioner arm.

## Patentansprüche

1. Eine Spannvorrichtung (200, 300) für ein endloses Antriebselement (103), enthaltend:
Einen Schaft (214) und eine Basis (215), die so montiert werden können, dass sie relativ zu einem Motor stationär sind;
einen Spannerarm (218), der relativ zu der Basis (214) um eine Spannerarmachse (241) schwenkbar ist;
eine Riemenscheibe (220, 320) auf dem Spannerarm (218), die um eine Riemenscheibenachse drehbar ist, die von der Spannerarmachse (241) versetzt ist, wobei die Riemenscheibe (220, 320) mit einem endlosen Antriebselement (103) in Eingriff gebracht werden kann;
eine Spannfeder (222), die so positioniert ist, dass sie den Spannerarm (218) in eine freie Armposition drückt; und
**dadurch gekennzeichnet, dass** die Spannvorrichtung des Weiteren aufweist ein Dämpfungselement (224), das mit dem Spannerarm (218) in Eingriff steht und mit einer Vielzahl von axial beabstandeten Segmenten der Spannerfeder (222) in Eingriff steht,
eine Buchse (221, 321b), die radial und/oder axial zwischen der Riemenscheibe (220, 320) und dem Spannerarm (218) angeordnet ist, um die Riemenscheibe (220) während der relativen Drehung zwischen der Riemenscheibe und dem Spannerarm (218) radial zu stützen, und
eine Öltransportstruktur (290, 292; 390, 391), die so konfiguriert ist, dass sie Öl von außerhalb der Spannvorrichtung (200, 300) zur Buchse (221, 321b) transportiert, um die Drehung der Riemenscheibe (220) relativ zum Spannerarm (218) zu erleichtern.

2. Spannvorrichtung nach Anspruch 1, wobei die Öltransportstruktur eine Durchgangsöffnung (290) von außerhalb der Spannvorrichtung durch die Basis (215) und einen Öldurchgang (292) durch den Spannerarm (218), der in Fluidverbindung mit der Durchgangsöffnung (290) steht, aufweist.

3. Spannvorrichtung nach Anspruch 2, wobei die Öltransportkonstruktion ferner eine ringförmige Ölkammer (291) aufweist, die sich strömungstechnisch zwischen der Durchgangsöffnung (290) und dem Öldurchgang (292) durch den Spannerarm (218) befindet, wobei die ringförmige Ölkammer (291) eine Strömungsverbindung zwischen der Durchgangsöffnung (290) und dem Öldurchgang (292) unabhängig von einer relativen Winkelposition zwischen der Durchgangsöffnung und dem Öldurchgang ermöglicht.

4. Spannvorrichtung nach einem der vorstehenden Ansprüche, wobei die Buchse (221) einen ringförmigen Abschnitt (221a) aufweist, der axial zwischen der Riemenscheibe (220) und dem Spannerarm (218) angeordnet ist, um die Riemenscheibe während der relativen Drehung zwischen der Riemenscheibe und dem Spannerarm axial zu stützen.

5. Spannvorrichtung nach einem der vorstehenden Ansprüche, wobei eine radial innere Oberfläche der Riemenscheibe mit einer radial äußeren Oberfläche des Spannerarms in Eingriff steht.

6. Spannvorrichtung nach einem der vorstehenden Ansprüche, wobei die Öltransportstruktur so konfiguriert ist, dass sie Öl von außerhalb der Spannvorrichtung (200) zur radial inneren Oberfläche der Riemenscheibe und zur radial äußeren Oberfläche des Spannerarms transportiert, um die Drehung der Riemenscheibe (220) relativ zum Spannerarm zu erleichtern.

## Revendications

1. Tendeur (200, 300) pour un élément d'entraînement sans fin (103), comprenant :
un arbre (214) et une base (215) qui peuvent être montés pour être stationnaires par rapport à un moteur ;
un bras tendeur (218) qui peut pivoter par rapport à l'arbre (214) autour d'un axe de bras tendeur (241) ;
une poulie (220, 320) sur le bras tendeur (218) pouvant tourner autour d'un axe de poulie qui est décalé par rapport à l'axe de bras tendeur (241), la poulie (220, 320) pouvant venir en prise avec un élément d'entraînement sans fin (103) ;
un ressort tendeur (222) qui est positionné pour pousser le bras tendeur (218) vers une position de bras libre ; et
**caractérisé en ce que** le tendeur comprend en outre
un élément amortisseur (224) qui met en prise le bras tendeur (218) et qui est mis en prise par une pluralité de segments espacés axialement du ressort tendeur (222),
et une bague (221, 321b) qui est positionnée radialement et/ou axialement entre la poulie (220, 320) et le bras tendeur (218) pour supporter radialement la poulie (220) pendant une rotation relative entre la poulie et le bras tendeur (218), et
une structure de transport d'huile (290, 292 ; 390, 391) configurée pour transporter de l'huile depuis l'extérieur du tendeur (200, 300) vers la bague (221, 321b) pour faciliter une rotation de la poulie (220) par rapport au bras tendeur (218).

2. Tendeur selon la revendication 1, dans lequel la structure de transport d'huile comprend une ouverture traversante (290) depuis l'extérieur du tendeur à travers la base (215), et un passage d'huile (292) à travers le bras tendeur (218) qui est en communication fluidique avec l'ouverture de passage (290).

3. Tendeur selon la revendication 2, dans lequel la structure de transport d'huile comprend en outre une chambre à huile en forme d'anneau (291) fluidiquement entre l'ouverture traversante (290) et le passage d'huile (292) à travers le bras tendeur (218), dans lequel la chambre à huile en forme d'anneau (291) permet une communication fluidique entre l'ouverture traversante (290) et le passage d'huile (292) indépendamment d'une position angulaire relative entre l'ouverture traversante et le passage d'huile.

4. Tendeur selon l'une des revendications précédentes, dans lequel la bague (221) comprend une partie annulaire (221a) qui est positionnée axialement entre la poulie (220) et le bras tendeur (218) pour supporter axialement la poulie pendant une rotation relative entre la poulie et le bras tendeur.

5. Tendeur selon l'une des revendications précédentes, dans lequel une surface radialement intérieure de la poulie est en prise avec une surface radialement extérieure du bras tendeur.

6. Tendeur selon l'une des revendications précédentes, dans lequel la structure de transport d'huile est configurée pour transporter de l'huile depuis l'extérieur du tendeur (200) vers la surface radialement intérieure de la poulie et la surface radialement extérieure du bras tendeur pour faciliter une rotation de la poulie (220) par rapport au bras tendeur.
